Europäisches Patentamt

(19) European Patent Office

Office européen des brevets

(11) **EP 0 768 637 B1**

(12) **EUROPEAN PATENT SPECIFICATION**

(45) Date of publication and mention
of the grant of the patent:
**03.04.2002 Bulletin 2002/14**

(51) Int Cl.⁷: **G09G 3/36**

(21) Application number: **96202955.9**

(22) Date of filing: **12.11.1991**

(54) **Display device including a correction circuit for the input signals**

Wiedergabeanordnung mit einer Korrekturschaltung zum Korrigieren der Eingangssignale

Dispositif d'affichage muni d'un circuit de correction des signaux d'entrée

(84) Designated Contracting States:
**DE FR GB IT NL**

(30) Priority: **19.11.1990 NL 9002516**

(43) Date of publication of application:
**16.04.1997 Bulletin 1997/16**

(62) Document number(s) of the earlier application(s) in
accordance with Art. 76 EPC:
**91202926.1 / 0 487 137**

(73) Proprietor: **Koninklijke Philips Electronics N.V.
5621 BA Eindhoven (NL)**

(72) Inventors:
• **Hartman, Robert Arnold, Int. Octrooibureau B.V.
5656 AA Eindhoven (NL)**
• **Knapp, Alan George, Int. Octrooibureau B.V.
5656 AA Eindhoven (NL)**

(74) Representative: **Raap, Adriaan Yde
INTERNATIONAAL OCTROOIBUREAU B.V.,
Prof. Holstlaan 6
5656 AA Eindhoven (NL)**

(56) References cited:
**EP-A- 0 196 889        EP-A- 0 229 716
GB-A- 2 207 272**

**Description**

The invention relates to a display device according to the introductory part of claim 1.

A display device of the type described in the opening paragraph is generally known as an active driven display device.

In liquid crystal display devices the capacitance associated with a pixel may vary with the drive voltage; this may detrimentally influence the response time.

Another source which leads to an erroneous first adjustment and hence a delayed response in such a picture display device using active drive is the so-called DC offset voltage which occurs when using the drive mode using thin-film transistors.

One of the objects of the present invention is to eliminate the above-mentioned drawbacks as much as possible.

It is based, *inter alia,* on the recognition that variations of the voltage across a pixel caused by (voltage-dependent) capacitances in the switch can be taken into account in advance.

To this end a display device according to the invention is characterized according to the characterizing part of claim 1.

In this way the pixels are submitted to a pre-adapted drive voltage which at least substantially prevents the above-described delay. The use of a look-up table for controlling drive signals is known per se from GB 2.207.272A. In this application temperature variations are taken into account.

EP 0 196 889 describes the correction of drive voltages in order to compensate for varying pixel capacitances.

During selection of a pixel an offset voltage which is also defined by the capacitance of the pixel can be generated across the pixel with a value of:

$$V_{off} = \frac{V_R C_X}{C_X + C_{LC}}$$

($V_R$: amplitude of selection pulse during falling edge, $C_X$: capacitance of drive element, i.e. the gate-drain capacitance of a thin-film transistor, $C_{LC}$: voltage-dependent capacitance of the liquid crystal). As a result, the voltage across the pixels acquires a value which differs from the externally applied signal voltage. Since both $C_X$ and $C_{LC}$ may be voltage-dependent, a correction can be defined for the drive voltage of a pixel. This correction can be performed for one of the capacitances $C_X$, $C_{LC}$ separately, or combined for both.

The correction stated above can be performed, for example, directly by means of a microprocessor, but this is usually rather cumbersome. Therefore, a look-up table is used. A RAM, ROM or microprocessor may be present as a separate unit, but it may alternatively form part of a larger memory or drive system which is already present for, for example, signal processing.

The invention will now be described in greater detail with reference to some embodiments and the drawings in which

Fig. 1 shows diagrammatically a display device according to the invention;
Fig. 2 shows the drive of a pixel *via* a thin-film transistor and
Fig. 3 shows the associated drive signals and voltages across the pixel.

The Figures are diagrammatic; corresponding components are generally denoted by the same reference numerals.

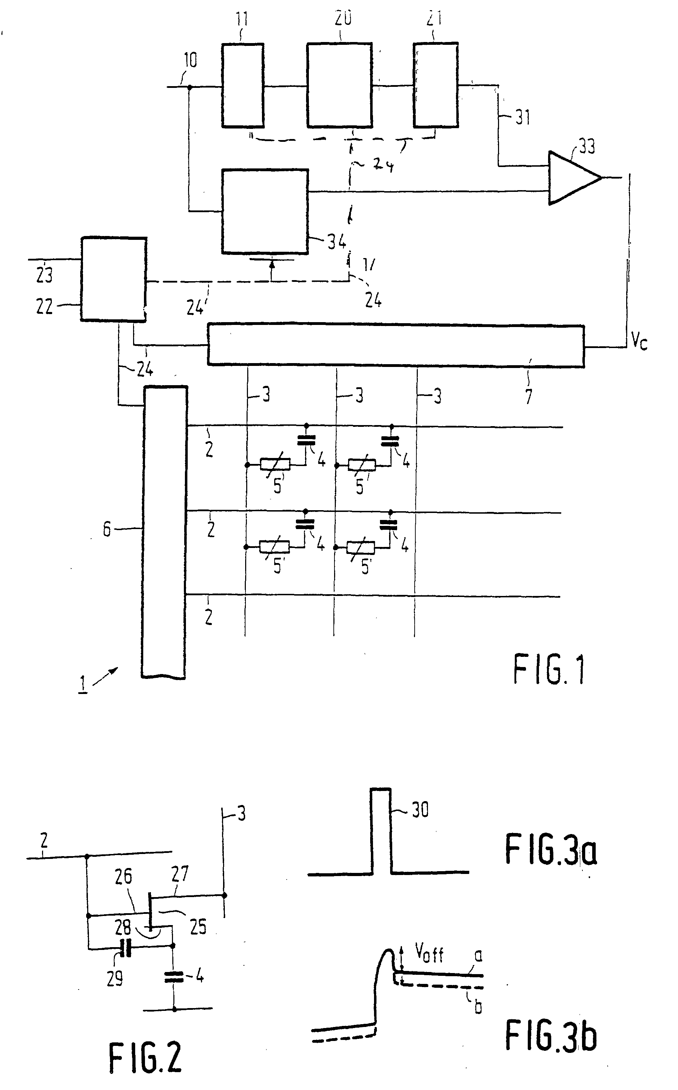

The display device of Fig. 1 comprises a plurality of pixels 4, for example, liquid crystal pixels arranged in rows and columns. These pixels are driven *via* switching elements 5, in this example, TFT's and are arranged in a matrix configuration. Information present at the column electrodes 3 is presented to the pixels 4 by successively selecting (energizing) row electrodes 2. Row electrodes 2 are successively selected by means of, for example, a shift register 6, while the information to be presented for a selected row of pixels is stored in a register 7.

An incoming video signal 10 may be directly connected to the register 7 for this purpose. The voltages at the column electrodes 3 are then equal to the presented video voltages for each pixel. Dependent on the drive mode, the switching elements 5 used in the matrix (TFTs), the column voltages and the selection voltages at the row electrodes 2, which voltages originate from the shift register 6, a pixel 4 is subjected to a voltage $V_I$ during selection. The liquid crystalline material which is used for the pixels has a given voltage-dependent dielectric constant. The capacitance of a pixel is therefore voltage-dependent and a given capacitance $C_I$ is associated with the voltage $V_I$.

In Fig. 1 the incoming video signal 10 is converted by means of an A/D converter 11 into digital signals of, for example, 8 bits.

Fig. 2 shows diagrammatically a pixel 4 which is driven by a thin-film transistor 25 and which forms part of a display device arranged in a matrix configuration comparable with that of Fig. 1. A row electrode 2 is connected to the gate electrode 26 of the transistor 25, while the column electrode 3 is connected to the source contact 27. The drain contact 28 is connected to the pixel 4 which has a voltage-dependent capacitance ($C_{LC}$). The capacitance 29 represents a capacitance $C_X$ associated with the transistor 25 (channel capacitance, gate-drain capacitance). Due to capacitive coupling this capacitance produces an offset voltage across the pixel with a value of:

$$V_{off} = \frac{V_R . C_X}{C_X + C_{LC}}$$

at the falling edge of a selection pulse 30 (Fig. 3a) on the row electrode 2. ($V_R$: amplitude selection pulse, falling edge). Since $C_{LC}$ is voltage-dependent (and is thus a function of the voltage across the pixel), $V_{off}$ is also voltage-dependent. A high capacitance $C_{LC}$ leads, for example, to a response on the pixel as is illustrated by means of curve a in Fig. 4b, whereas a lower value gives rise to curve b. The voltage drop $V_{off}$ across the pixel can be compensated again by employing a correction compensating for this voltage drop, dependent on the applied drive voltages.

To this end the external signal 10 is applied to an A/D converter 11 (Fig. 1). It addresses a look-up table 20 whose output supplies a (digitized) corrected voltage value and which, if desired, also is corrected for voltage dependency of $C_X$. A correction voltage 31 is obtained *via* a D/A converter 21. The normally processed signal 32 from the processor 34 is added to the correction voltage by means of the circuit 33 which applies the correct voltage via shift register 7 to the column electrodes 3.

The look-up table 20, which comprises, for example, a ROM or RAM, is programmed in such a way that a corrected drive value defined by the above-mentioned formula is passed on (in a digital form) to the D/A converter 21. The corrected column voltages converted to analog values are then also loaded into the register 7.

The drive circuit 22, which receives a synchronizing signal 23, ensures the mutual synchronization of the different switches, registers, memories, etc. *via* drive lines 24.

## Claims

1. A display device (1) comprising an electro-optical medium between two supporting plates, provided with a system of pixels (4) arranged in rows and columns, means for providing selection voltages to row electrodes (2) to select thin film transistors (25) and means or providing column voltages to column electrodes (3), each thin-film transistor (25) having a gate electrode (26) connected to a row electrode, a source contact (27) connected to a column electrode, and a drain contact (28) connected to the pixel, wherein the display device is provided with correction means (11,20,21) for correcting external signals for off-set voltages due to capacitive effects, which correction means comprise an A/D converter (11) for converting the incoming signal into digital signals addressing a look-up table (20), the look-up table being arranged for supplying at its output a corrected digital signal for addressing a D/A converter (21) for providing a correction voltage for a pixel, the correction voltage being determined in the look-up table by $(V_R.C_X)/(C_X + C_{LC})$, in which $V_R$ is the amplitude of a selection pulse during falling edge, $C_X$ is the capacitance of the drive element of the pixel and $C_{LC}$ is the capacitance of the electro-optical medium.

2. A display device according to Claim 1, wherein the correction means determine the correction voltage, dependent on the voltage dependent capacitance of the electro-optical medium.

3. A display device according to Claim 1 or 2, wherein the correction means determine the correction voltage, dependent on the voltage dependent capacitance of the drive element of the pixel.

## Patentansprüche

1. Wiedergabeanordnung (1) mit einem elektrooptischen Medium zwischen zwei Trägerplatten, mit einem System von Pixeln (4), die in Reihen und Spalten vorgesehen sind, mit Mitteln zum Zuführen von Selektionsspannungen zu Reihenelektroden (2) zum Selektieren von Dünnfilmtransistoren (25) und mit Mitteln zum Zuführen von Spaltenspannungen zu Spaltenelektroden (3), wobei von jedem Dünnfilmtransistor (25) die Gate-Elektrode (26) mit einer Reihenelektrode verbunden ist, der Source-Kontakt (27) mit einer Spaltenelektrode verbunden ist und ein Drain-Kontakt (28) mit dem Pixel verbunden ist, wobei die Wiedergabeanordnung mit Korrekturmitteln (11, 20, 21) versehen ist zum Korrigieren externer Signale auf Offset-Spannungen wegen kapazitiver Effekte, wobei diese Korrekturmittel einen Analog-Digitalwandler (11) aufweisen zum Umwandeln des eintreffenden Signals in digitale Signale, die eine Nachschlagtabelle (20) adressieren, wobei die Nachschlagtabelle dazu vorgesehen ist, an dem Ausgang ein korrigiertes digitales Signal zu liefern zum Adressieren eines Digital-Analog-Wandlers (21) zum Liefern einer Korrekturspannung für ein Pixel, wobei die Korrekturspannung in der Nachschlagtabelle durch $(V_R.C_X) / (C_X + C_{LC})$ bestimmt ist, wobei $V_R$ die Amplitude eines Selektionsimpulses während der abfallenden Flanke ist, wobei $C_X$ die Kapazität des Ansteuerungselementes des Pixels ist und wobei $C_{LC}$ die Kapazität des elektrooptischen Mediums ist.

2. Wiedergabeanordnung nach Anspruch 1, wobei die Korrekturmittel die Korrekturspannung bestimmen, und zwar in Abhängigkeit von der spannungsabhängigen Kapazität des elektrooptischen Mediums.

3. Wiedergabeanordnung nach Anspruch 1 oder 2, wobei die Korrekturmittel die Korrekturspannung bestimmen, und zwar in Abhängigkeit von der Kapazität des Ansteuerungselementes des Pixels.

## Revendications

1. Dispositif d'affichage (1) comprenant un milieu électro-optique entre deux plaques de support, pourvu d'un système de pixels (4) agencés dans des rangées et dans des colonnes, des moyens pour fournir des tensions de sélection à des électrodes de rangée (2) pour sélectionner des transistors à couches minces (25) et des moyens pour fournir des tensions de colonne à des électrodes de colonne (3), chaque transistor à couches minces (25) ayant une électrode de grille (26) connectée à une électrode de rangée, un contact de source (27) connecté à une électrode de colonne et un contact de drain (28) connecté au pixel, dans lequel le dispositif d'affichage est pourvu de moyens de correction (11, 20,21) pour corriger des signaux externes pour des tensions de décalage du fait d'effets capacitifs, lesdits moyens de correction comportant un convertisseur analogique-numérique (11) pour convertir le signal entrant en des signaux numériques adressant une table de consultation (20), la table de consultation étant agencée de manière à délivrer à sa sortie un signal numérique corrigé pour adresser un convertisseur numérique-analogique (21) afin de fournir une tension de correction pour un pixel, la tension de correction étant déterminée dans la table de consultation par $(V_R.C_X)/(C_X + C_{LC})$ où $V_R$ est l'amplitude d'une impulsion de sélection au cours du flanc arrière, $C_X$ est la capacité de l'élément d'excitation du pixel et $C_{LC}$ est la capacité du milieu électro-optique.

2. Dispositif d'affichage selon la revendication 1, dans lequel les moyens de correction déterminent la tension de correction, dépendamment de la capacité dépendante de la tension du milieu électro-optique.

3. Dispositif d'affichage selon la revendication 1 ou 2, dans lequel les moyens de correction déterminent la tension de correction, dépendamment de la capacité dépendante de la tension de l'élément d'excitation du pixel.

FIG.1

FIG.2

FIG.3a

FIG.3b